# EUROPÄISCHE PATENTSCHRIFT

(11) **EP 3 037 215 B1**
(45) Veröffentlichungstag und Bekanntmachung des Hinweises auf die Patenterteilung: **29.04.2020**
(21) Anmeldenummer: 15200881.9
(22) Anmeldetag: 17.12.2015
(51) Int. Cl.: B25C 5/11, F24D 3/14

(54) **ROHRKLAMMER ZUR BEFESTIGUNG VON ROHREN FÜR FLÄCHENHEIZUNGEN/-KÜHLUNGEN**
PIPE CLAMP FOR FIXING PIPES FOR SURFACE HEATERS/COOLERS
COLLIER POUR TUBE DESTINE A FIXER DES TUBES POUR DES CHAUFFAGES/ REFROIDISSEMENTS EN SURFACE

(30) Priorität: 22.12.2014 DE 202014010015 U
(43) Veröffentlichungstag der Anmeldung: 29.06.2016
(73) Patentinhaber: KERMI GmbH, 94447 Plattling (DE)
(72) Erfinder: ABERTSHAUSER, Dennis, 94469 Deggendorf (DE); REISINGER, Alexander, 94239 Ruhmannsfelden (DE)
(74) Vertreter: Patentanwälte Bressel und Partner mbB

(56) Entgegenhaltungen:
- DE-U1-202011 002 652
- US-A- 396 677
- US-A- 3 583 663
- US-A1- 2011 264 181

## Beschreibung

Die vorliegende Erfindung betrifft eine Anordnung zur Befestigung von Rohren für Flächenheizungen/ -kühlungen, insbesondere für Fußbodenheizungen nach dem Oberbegriff des Anspruchs 1.

Aus dem Stand der Technik sind derartige Anordnungen bzw. Systeme mit Klammern insbesondere zur Verlegung von Flächenheizungen bekannt.

Bei der Installation einer Fußbodenheizung (FBH) ist das Befestigen der Rohre auf einem geeigneten Untergrund ein wichtiger Bestandteil. Dafür gibt es für verschiedene FBH-Systeme verschiedene Befestigungsmöglichkeiten. Für das hier beschriebene FBH-System sind in erster Linie die "Tackersysteme" und "Drahtklammersysteme" von Bedeutung.
Das hier beschriebene System bezieht sich im Speziellen auf Fußbodenheizungsinstallation unter Verwendung von Nassestrich.

In der DE 3105816 C2 wird eine Flächenheizung, insbesondere Fußbodenheizung beschrieben, bei der die Heizungsrohre auf einer vorzugsweise mit einer Folie abgedeckten Dämmstoffplatte durch Halter aus Draht fixiert sind, die die Rohre mindestens an einer von der Dämmstoffplatte abgewandten Mantellinie mit einem Berührungsteil festlegen und mit einem gebogenen Teil in die Dämmstoffplatte eindringen. Der Halter schwenkt um die Rohrachse des zu befestigenden Rohres. Der in die Dämmstoffplatte eingedrungene Bogen der Haltenadel lässt sich ohne weitere Schäden an der Dämmstoffplatte wieder ausschwenken.

In der DE 78 15 984 U1 wird ebenfalls eine Flächenheizung beschrieben, bei der die Heizrohre auf einer mit einer Isolierschicht bedeckten Dämmstoffplatte befestigt werden. Als Befestigungsmittel werden so genannte Krampen verwendet, deren Schenkelenden um mindestens 90° abgebogen sind. Die Krampen beschädigen schon beim Einbringen die unter der Isolierschicht befindliche Dämmstoffplatte erheblich, indem die rechtwinklig angeordneten Schenkelenden einen in Folge des Aufschwenkens auf das Rohr erforderlichen Kreisbogen beschreiben und damit entlang dieses Kreisbogens die Dämmstruktur zerstören. Auch dieses Befestigungsmittel lässt sich durch eine dem Einbringvorgang gegenläufige Bewegung ohne weitere als die ohnehin schon an der Dämmstoffplatte verursachten Schäden wieder entfernen.

In der EP 0 059 252B1 wird ein Verfahren und eine Vorrichtung zur Befestigung von für eine Flächenheizung bestimmten Rohren offenbart, wobei insbesondere eine dafür vorgesehenen U-förmige Rohklammer beschrieben wird. Dabei ist der Eintrittspunkt der Spitzen der Seitenschenkel in den Untergrund ungleich der späteren Endlage in der Befestigungsposition. Dadurch entsteht bei der Umformung ein Langloch in der zur Verlegung vorgesehenen Styroporplatte. Dies ist aber für die Haltekräfte als nachteilig anzusehen, da die Klammerschenkel durch die entstehenden Langlöcher leicht aus der Verankerung austreten können. Außerdem entspricht die Eindringtiefe der beschriebenen Klammer in etwa dem Rohrdurchmesser des zu befestigenden Rohres und ist demzufolge nicht für Verlegeplatten geringer Höhe (≤ 5 mm) geeignet.

Ein weiteres Verlegesystem ist aus der DE 20 2011 002 652 U1 bekannt. Es zeigt eine Anordnung gemäß dem Oberbegriff von Anspruch 1.

Systemkomponenten sind hierbei eine Kunststoffhohlkammerplatte, eine Drahtklammer als Rohrhalter sowie ein entsprechendes Setzwerkzeug für die Drahtklammer. Zur Vermeidung von Beschädigungen an der unter der Verlegeplatte befindlichen Dichtlage (Folie) darf die Verlegeplattenunterseite durch die Rohrklammer nicht durchstoßen werden. Ein deutlicher Nachteil des beschriebenen Systems sind die hohen Herstellkosten des dafür erforderlichen Setzwerkzeugs infolge der vergleichsweise sehr aufwendigen Gerätemechanik. Der heutige Stand der Technik der Drahtklammer macht es nicht möglich ein Setzwerkzeug zu realisieren, bei dem die benötigte Umformenergie für den Draht durch den Installateur in ergonomischem Maße bereitgestellt werden kann. Der durch diesen Umstand benötigte Federspeicher hat durch dessen aufwendige Konstruktion einen signifikanten Einfluss auf die Herstellkosten des Setzwerkzeugs.

Die vorliegende Erfindung soll die bekannten Anordnungen, Rohrklammern und Systeme insbesondere bezüglich der Haltekräfte und der Einsatzvielfalt bezogen auf die verwendeten Verlegeplatten sowie des Geräteaufwandes verbessern. Dabei soll die Kinematik der Rohrklammer auf eine niedrigere Umformenergie verändert werden, ohne deren Eigenschaften bzgl. der Festigkeit, Eindringtiefe, Drahtabmessung negativ zu verändern.

Erfindungsgemäß wird diese Aufgabe durch Anordnung gelöst, welche mindestens eine Rohrklammer, mindestens ein Rohr für Flächenheizungen/ -kühlungen, ein Setzwerkzeug und eine Verlegeplatte umfasst, wobei die Rohrklammer zur Befestigung des mindestens einen Rohres auf der Verlegeplatte vorgesehen ist. Die Rohrklammer weist einen mittleren, bogenförmigen Abschnitt mit an dessen Enden anschließenden symmetrisch angeordneten Schwenkbögen auf, die durch Einsatz des Setzwerkzeuges in eine für den Untergrund geeignete Verlegeplatte einbringbar sind, wobei der bogenförmige Abschnitt im mittleren Bereich der Rohrklammer einen der Rohrkontur des zu befestigenden Rohres angepassten Bereich aufweist und das Öffnungsmaß des bogenförmigen Abschnitts größer ist als der Rohrdurchmesser, wobei die jeweiligen Enden des bogenförmigen Abschnitts über Schenkeldrehpunkte mit den Schwenkbögen verbunden sind und die Schwenkbögen krallen- oder klauenartig mit einem zum Untergrund geöffneten bogenartigen Verlauf ausgebildet sind, wobei im Bereich des bogenartigen Verlaufs Angriffspunkte vorgesehen sind, deren Abstand zum jeweiligen Schenkeldrehpunkt den Hebelarm für die Einbringung der Rohrklammer in die Verlegeplatte mittels des Setzwerkzeuges bildet.
Die Rohrklammer, das mindestens eine Rohr für Flächenheizungen/ -kühlungen, das Setzwerkzeug und die Verlegeplatte sind dabei erfindungsgemäß so gestaltet, dass das zu befestigende Rohr das Widerlager für die Umformung bildet und die Umformung dabei zum einen über die Schenkeldrehpunkte und zum anderen über das Rohr erfolgt, wobei der Abschnitt nach der Umformung mehr als die Hälfte des Rohrumfangs umschließt.

Die erfindungsgemäßen Rohrklammern können sowohl in Dämmstoffplatten als auch in Hohlkammerplatten mit einem sehr geringen Auftrag (Steghöhe) der Rohrklammer über dem Rohr eingebracht werden. Dabei können sehr hohe Haltekräfte bei nur geringer Eindringtiefe erreicht werden, was den Einsatz der Klammern in Verlegeplatten bzw. Systemen mit sehr geringen Dicken erlaubt.

Im Gegensatz zum Stand der Technik stellt nicht ein ausschwenkbares Bauteil am Setzwerkzeug, sondern das zu befestigende Fußbodenheizungsrohr selbst das Widerlager für die Umformung dar. Die Umformung erfolgt zum einen über die Schenkeldrehpunkte und zum anderen über das Rohr selbst. Durch Letzteres umschließt die Drahtklammer nach der Umformung das Rohr in größerem Maße.

Die Schwenkbögen weisen einen Außenradius auf, der kleiner ist als 10 mm, vorzugsweise kleiner als 5 mm zuzüglich des Abstands der Schenkeldrehpunkte zur Verlegeplattenoberseite. Dabei ist vorgesehen, dass die Endspitzen der Schwenkbögen nach Einbringung in den Untergrund in Richtung Rohr gebogen sind und sich gegenüberliegen. Die Rohrklammer besteht vorzugsweise aus Draht mit einer Stärke < 2 mm und weist eine Eindringtiefe in den Untergrund von < 10 mm, vorzugsweise von < 5 mm auf.

Vorteilhaft ist vorgesehen, dass der Drehradius während der Umformung gleich bleibt, wodurch sich die Schwenkbögen während der Umformung auf einer Kurve durch einen Eindringpunkt bewegen, wobei die Schwenkbögen zu Beginn der Umformung einen Winkel α zwischen der Tangente an den Schwenkbogenenden und der Plattenoberseite aufweisen der in einem Bereich zwischen 90° und 40° liegt. Der Einbringvorgang der Rohrklammern zeichnet sich dadurch aus, dass sich die Schenkelenden auf einem Kreisbogen bewegen, welcher zu maximalen Eindringtiefe passt. Bei diesem Schwenkbiegevorgang werden die Schenkelenden sowie die Angriffspunkte b1, c1 in die Verlegeplatte eingebracht. Dabei wird die Form der Rohrklammer ähnlich wie beim Klammern von Papierbögen verändert und ein rückwärtiges Wieder-Heraus-Schwenken, wie bei den aus dem Stand der Technik bekannten Krampen, ist unmöglich.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden.
Es zeigen
- Fig. 1a: eine Variante der Geometrie der Rohrklammer vor und nach dem Setzvorgang in eine Tackerplatte,
- Fig. 1b: eine Variante der Geometrie der Rohrklammer vor und nach dem Setzvorgang in eine Hohlkammerplatte,
- Fig. 2: eine weitere Variante der Geometrie der Rohrklammer vor und nach dem Setzvorgang,
- Fig. 3: Setzvorgang mit Rohrklammer und Setzgerät in eine Hohlkammerplatte,
- Fig. 3a: eine Variante der erfindungsgemäßen Rohrklammer gemäß Fig. 1 mit angedeutetem Setzgerät und Untergrund vor dem Setzvorgang,
- Fig.: 3b eine Variante der erfindungsgemäßen Rohrklammer gemäß Fig. 1 mit angedeutetem Setzgerät und Untergrund nach dem Setzvorgang.

Die Rohrklammer 1 weist einen mittleren, bogenförmigen Abschnitt a mit an dessen Enden anschließenden symmetrisch angeordneten Schwenkbögen b, c auf, die durch Einsatz eines Setzwerkzeuges 4 in eine für den Untergrund geeignete Verlegeplatte 2 einbringbar sind. Als Verlegeplatten 2 können sogenannte Hohlkammerplatten oder Tackerplatten oder Platten aus Kunststoffschaum, welcher auf der Oberseite mit Folie kaschiert ist, verwendet werden. Der Kunststoffschaum könnte zusätzlich auf der Unterseite noch mit einer selbstklebenden Schicht versehen sein.

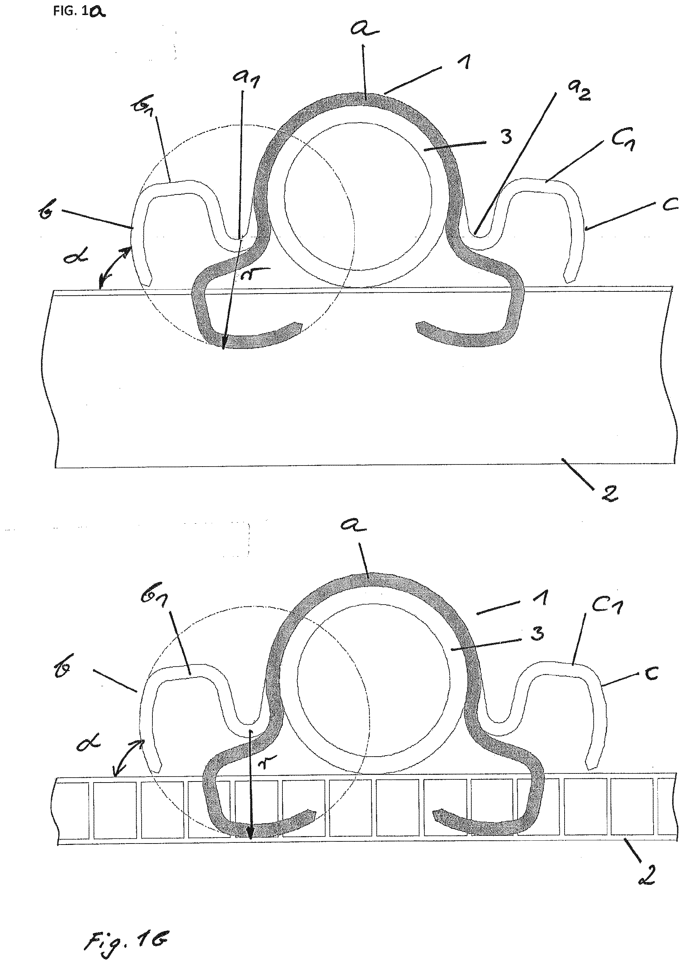

Die Fig. 1a zeigt eine Tackerplatte, während in der Fig. 1b eine Hohlkammerplatte dargestellt ist. In beiden Figuren ist die Rohrklammer 1 vor und nach dem Setzvorgang dargestellt. Das Setzgerät 4 ist hier nicht dargestellt. Der Abschnitt a weist im mittleren Bereich der Rohrklammer 1 einen der Rohrkontur des zu befestigenden Rohres 3 angepassten Bereich auf, wobei das Öffnungsmaß des Abschnitts a aber größer ist als der Rohrdurchmesser. Die jeweiligen Enden des Abschnitts a sind über die Schenkeldrehpunkte a1, a2 mit den Schwenkbögen b, c verbunden. Dabei sind die Schwenkbögen b, c krallen- oder klauenartig mit einem zur Verlegeplatte 2 geöffneten bogenartigen Verlauf ausgebildet, wobei im Bereich des bogenartigen Verlaufs die Angriffspunkte b1, c1 vorgesehen sind, deren Abstand zum jeweiligen Schenkeldrehpunkt a1, a2 den Hebelarm für die Einbringung der Rohrklammer 1 in die Verlegeplatte 2 mittels des Setzwerkzeuges 4 bildet. Die Schwenkbögen b, c weisen in den Ausführungsbeispielen einen Außenradius auf, der kleiner ist als 5 mm zuzüglich des Abstands der Schenkeldrehpunkte a1, a2 zur Verlegeplatte. Die Rohrklammern weisen dann eine Eindringtiefe in die Verlegeplatte von < 5 mm auf. Es sind aber auch andere Außerradien der Schwenkbögen möglich, sofern diese kleiner 10 mm zuzüglich des Abstands der Schenkeldrehpunkte a1, a2 zur Verlegeplatte sind. Die Rohrklammern weisen dann eine Eindringtiefe in die Verlegeplatte von <10 mm auf.

Die Endspitzen der Schwenkbögen b, c sind nach Einbringung in den Untergrund in Richtung Rohr 3 gebogen und liegen sich gegenüber. Der Abschnitt a umschließt nach der Umformung mehr als die Hälfte des Rohumfangs. Der Drehradius r bleibt während der Umformung gleich, wodurch sich die Schwenkbögen b, c während der Umformung auf einer Kurve durch einen Eindringpunkt bewegen. Die Schwenkbögen b, c weisen einen Winkel α zwischen der Tangente an den Schwenkbogenenden und der Plattenoberseite auf der in einem Bereich zwischen 90° und 40° liegt. Die Rohrklammer 1 bestehen aus Draht und weisen eine Stärke < 2 mm auf.

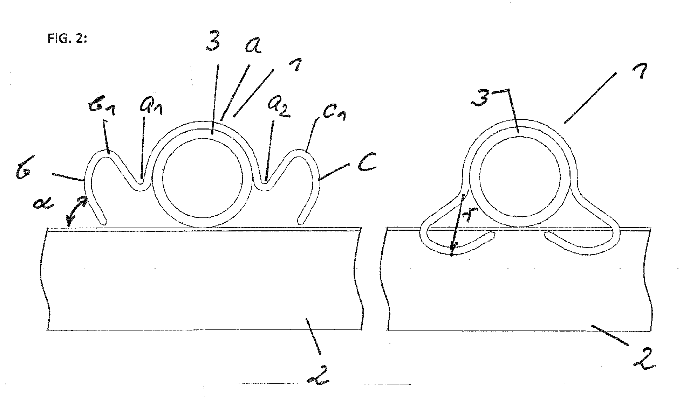

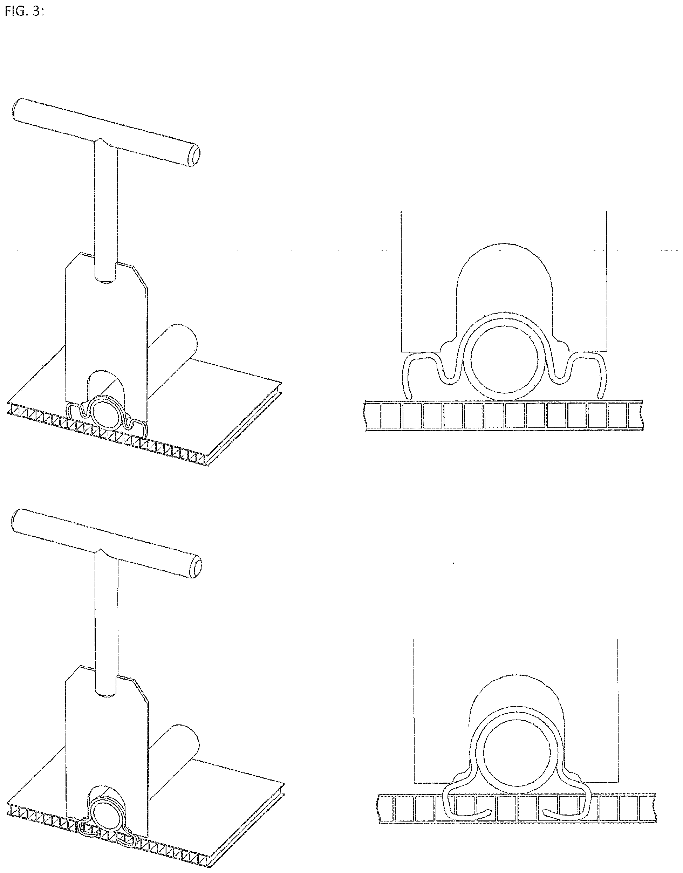

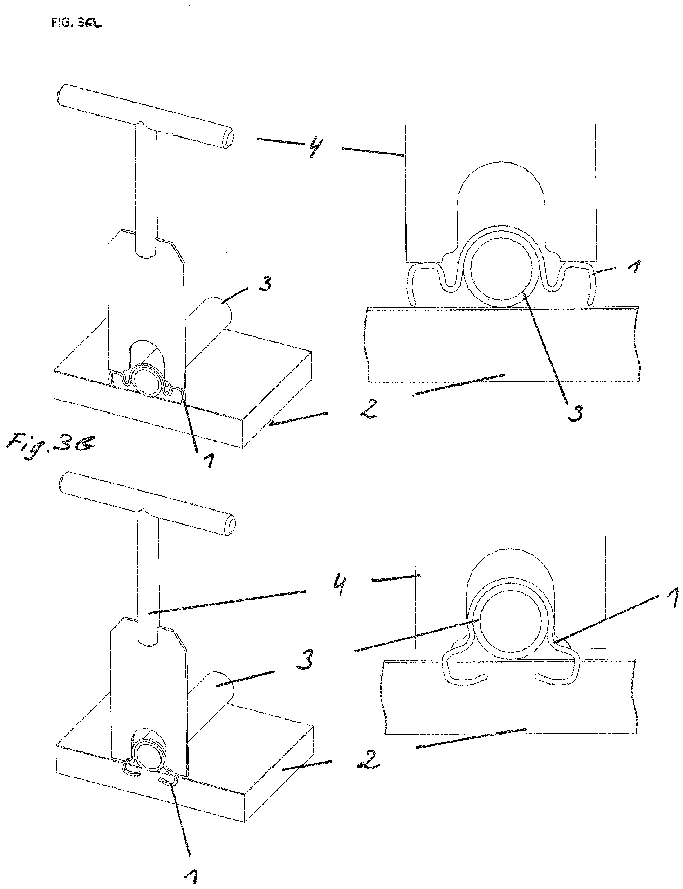

Die Fig. 2 zeigt eine weitere Ausführungsform der erfindungsgemäßen Klammer. In den Fig. 3 wird der Setzvorgang mit angedeutetem Setzgerät 4 und Verlegeplatte 2 gezeigt, wobei die Fig. 3a und 3b eine Dämmstoffplatte zeigen und der Vorgang in der Fig. 3 anhand einer Hohlkammerplatte dargestellt ist.

Die Rohklammern bestehen vorzugsweise aus Metall oder einer Metall-Kunststoffkombination und weisen bei geringem Materialeinsatz einerseits eine hohe Festigkeit auf, um die Verlegeplatte 2 leicht zu durchdringen, sind aber andererseits leicht genug umformbar, um in der Verlegeplatte so umgebogen zu werden, dass ein Formschluss entsteht. Eine Abschrägung und/oder spitze Form der Enden der Rohrklammer erleichtert das Eindringen in die Verlegeplatte. Die Festigkeit der Rohrklammer ist so bemessen, dass ein Aufbiegen der Schwenkbögen durch die vom Rohr bei der Verlegung auf den Rohrhalter ausgeübten Kräfte sowie durch äußere Einwirkung bis zur Estricheinbringung und Erstarrung auftretenden Belastungen zuverlässig verhindert wird.

Im Gegensatz zum Stand der Technik stellt nicht ein ausschwenkbares Bauteil am Setzwerkzeug sondern das zu befestigende Fußbodenheizungsrohr das Widerlager für die Umformung dar.
Die Umformung erfolgt dabei zum einen über die Schenkeldrehpunkte a1, a2 und zum anderen über das Rohr 3 selbst. Durch Letzteres umschließt die Rohrklammer nach der Umformung das Rohr in größerem Maße.

Durch die Kinematik der erfindungsgemäßen Rohrklammer wird zum einen der Wegfall eines ausschwenkbaren Widerlagers im Setzgerät ermöglicht, zum anderen können durch geeignete Treiberkonstruktion im Vergleich zur bisherigen Drahtklammer günstigere Hebelverhältnisse während der Umformung (speziell am Ende der Umformung) erzeugt werden. Bei der erfindungsgemäßen Klammerform ist, bei entsprechendem Umformgrad, der wirkende Hebelarm h der Abstand der Schenkeldrehpunkte a1, a2 zu den Angriffspunkten b1, c1. Dieser Hebelarm h ist deutlich größer als die aus dem Stand der Technik bekannten Hebelarme. Bei gleichen Materialeigenschaften und Abmessungen des Klammerdrahts ergibt sich daraus eine deutlich geringere erforderliche Umformenergie. Die Umformenergie kann somit mit der neuen Kontur ohne Federspeicher unmittelbar durch den Verarbeiter bereitgestellt werden.

Der Wegfall des ausschwenkbaren Widerlagers und des Federspeichers sowie die für die Umformung niedrigeren wirkende Kräfte ermöglichen es, die Herstellkosten des Setzgeräts signifikant zu reduzieren.

## Patentansprüche

1. Anordnung umfassend mindestens eine Rohrklammer (1), mindestens ein Rohr (3) für Flächenheizungen/ -kühlungen, ein Setzwerkzeug (4) und eine Verlegeplatte (2), wobei die Rohrklammer (1) zur Befestigung des mindestens einen Rohres (3) auf der Verlegeplatte (2) vorgesehen ist, wobei die Rohrklammer (1) einen mittleren, bogenförmigen Abschnitt (a) mit an dessen Enden anschließenden symmetrisch angeordneten Schwenkbögen (b, c) aufweist, die durch Einsatz des Setzwerkzeuges (4) in eine für den Untergrund geeignete Verlegeplatte (2) einbringbar sind, wobei der Abschnitt (a) im mittleren Bereich der Rohrklammer (1) einen der Rohrkontur des zu befestigenden Rohres (3) angepassten Bereich aufweist und das Öffnungsmaß des Abschnitts (a) größer ist als der Rohrdurchmesser, wobei die jeweiligen Enden des Abschnitts (a) über Schenkeldrehpunkte (a1, a2) mit den Schwenkbögen (b, c) verbunden sind und die Schwenkbögen (b, c) krallen- oder klauenartig mit einem zum Untergrund geöffneten bogenartigen Verlauf ausgebildet sind, wobei im Bereich des bogenartigen Verlaufs Angriffspunkte (b1, c1) vorgesehen sind, deren Abstand zum jeweiligen Schenkeldrehpunkt (a1, a2) den Hebelarm für die Einbringung der Rohrklammer (1) in die Verlegeplatte (2) mittels des Setzwerkzeuges (4) bildet **dadurch gekennzeichnet, dass** die Rohrklammer (1), das mindestens eine Rohr (3) für Flächenheizungen/ -kühlungen, das Setzwerkzeug (4) und die Verlegeplatte (2) so gestaltet sind, dass das zu befestigende Rohr (3) das Widerlager für die Umformung bildet und die Umformung dabei zum einen über die Schenkeldrehpunkte (a1, a2) und zum anderen über das Rohr (3) erfolgt, wobei der Abschnitt nach der Umformung mehr als die Hälfte des Rohrumfangs umschließt.

2. Anordnung nach Anspruch 1, **dadurch gekennzeichnet, dass** die Schwenkbögen (b, c) einen Radius aufweisen, der kleiner ist als 10 mm, zuzüglich des Abstands der Schenkeldrehpunkte (a1, a2) zur Verlegeplattenoberseite.

3. Anordnung nach den Anspruch 2, **dadurch gekennzeichnet, dass** die Rohrklammer eine Eindringtiefe in die Verlegeplatte von < 10 mm aufweist.

4. Anordnung nach Anspruch 1, **dadurch gekennzeichnet, dass** die Schwenkbögen (b, c) der Rohrklammer einen Radius aufweisen, der kleiner ist als < 5 mm, zuzüglich des Abstands der Schenkeldrehpunkte (a1, a2) zur Verlegeplattenoberseite.

5. Anordnung nach den Anspruch 4, **dadurch gekennzeichnet, dass** die Rohrklammer eine Eindringtiefe in die Verlegeplatte von < 5 mm aufweist.

6. Anordnung nach einem der Ansprüche 1 bis 5, **dadurch gekennzeichnet, dass** die Rohrklammer aus Draht besteht und eine Stärke von < 2mm aufweist.

7. Anordnung nach einem der Ansprüche 1 bis 6, **dadurch gekennzeichnet, dass** die Endspitzen der Schwenkbögen (b, c) in die Verlegeplatte einbringbar und in Richtung Rohr (3) gebogen sind und sich gegenüberliegen.

8. Verfahren zum Befestigen eines Rohres (3) auf einer Verlegeplatte (2) mittels einer Rohrklammer (1), wobei Rohr (3), Rohrklammer (1), Setzwerkzeug (4) und Verlegeplatte (2) eine Anordnung nach den Ansprüchen 1 bis 7 bilden, **dadurch gekennzeichnet, dass** das zu befestigende Rohr (3) das Widerlager für die Umformung bildet und die Umformung dabei zum einen über die Schenkeldrehpunkte (a1, a2) und zum anderen über das Rohr (3) selbst erfolgt, wobei der Abschnitt (a) nach der Umformung mehr als die Hälfte des Rohumfangs umschließt.

9. Verfahren nach den Anspruch 8, **dadurch gekennzeichnet,**
**dass** der Drehradius r während der Umformung gleich bleibt, wodurch sich die Schwenkbögen (b, c) während der Umformung auf einer Kurve durch einen Eindringpunkt bewegen, wobei die Schwenkbögen (b, c) zu Beginn der Umformung einen Winkel α zwischen der Tangente an den Schwenkbogenenden und der Plattenoberseite aufweisen der, in einem Bereich zwischen 90° und 40° liegt.

## Claims

1. Arrangement comprising at least one pipe clip (1), at least one pipe (3) for panel heating/cooling systems, a setting tool (4) and an installation board (2), wherein the pipe clip (1) is provided for fastening the at least one pipe (3) to the installation board (2), wherein the pipe clip (1) has a central, arcuate portion (a) with symmetrically arranged pivoting arcs (b, c) adjoining the ends thereof, said pivoting arcs (b, c) being introducible into an installation board (2) suitable for the underlying surface by using the setting tool (4), wherein the portion (a) in the central region of the pipe clip (1) has a region that matches the pipe contour of the pipe (3) to be fastened and the opening size of the portion (a) is greater than the pipe diameter, wherein the respective ends of the portion (a) are connected to the pivoting arcs (b, c) via leg pivot points (a1, a2) and the pivoting arcs (b, c) are formed in a claw-like manner with an arc-like profile that is open towards the underlying surface, wherein, in the region of the arc-like profile, points of application (b1, c1) are provided, the spacing of which from the respective leg pivot point (a1, a2) forms the lever arm for introducing the pipe clip (1) into the installation board (2) by means of the setting tool (4), **characterized in that** the pipe clip (1), the at least one pipe (3) for panel heating/cooling systems, the setting tool (4) and the installation board (2) are designed such that the pipe (3) to be fastened forms the counter bearing for the reshaping and the reshaping takes place via the leg pivot points (a1, a2) for the one part and via the pipe (3) for the other, wherein the portion encloses more than half the pipe circumference after the reshaping.

2. Arrangement according to Claim 1, **characterized in that** the pivoting arcs (b, c) have a radius that is less than 10 mm, plus the spacing of the leg pivot points (a1, a2) from the installation board top side.

3. Arrangement according to Claim 2, **characterized in that** the pipe clip has a penetration depth into the installation board of < 10 mm.

4. Arrangement according to Claim 1, **characterized in that** the pivoting arcs (b, c) of the pipe clip have a radius that is less than 5 mm, plus the spacing of the leg pivot points (a1, a2) from the installation board top side.

5. Arrangement according to Claim 4, **characterized in that** the pipe clip has a penetration depth into the installation board of < 5 mm.

6. Arrangement according to one of Claims 1 to 5, **characterized in that** the pipe clip consists of wire and has a thickness of < 2 mm.

7. Arrangement according to one of Claims 1 to 6, **characterized in that** the end tips of the pivoting arcs (b, c) are introducible into the installation board and are bent in the direction of the pipe (3) and are located opposite one another.

8. Method for fastening a pipe (3) to an installation board (2) by means of a pipe clip (1), wherein the pipe (3), pipe clip (1), setting tool (4) and installation board (2) form an arrangement according to Claims 1 to 7, **characterized in that** the pipe (3) to be fastened forms the counter bearing for the reshaping and the reshaping takes place via the leg pivot points (a1, a2) for the one part and via the pipe (3) itself for the other, wherein the portion (a) encloses more than half the pipe circumference after the reshaping.

9. Method according to Claim 8, **characterized in that** the turning radius r remains the same during the reshaping, with the result that the pivoting arcs (b, c) move on a curve through a penetration point during the reshaping, wherein, at the start of the reshaping, the pivoting arcs (b, c) exhibit an angle α between the tangent to the pivoting arc ends and the board top side that is in a range between 90° and 40°.

## Revendications

1. Ensemble comprenant au moins un collier de serrage (1), au moins un tuyau (3) destiné au chauffage/refroidissement de surface, un outil de pose (4) et une plaque de pose (2), le collier de serrage (1) étant prévu pour fixer l'au moins un tuyau (3) sur la plaque de pose (2), le collier de serrage (1) comportant une portion centrale incurvée (a) pourvue de coudes pivotants (b, c) qui sont disposés symétriquement, qui se raccordent aux extrémités de ladite portion, qui peuvent être insérés dans une plaque de pose (2) adaptée au sol à l'aide de l'outil de pose (4), la portion (a) comportant dans la région centrale du collier de serrage (1) une région adaptée au contour du tuyau (3) à fixer et la dimension d'ouverture de la portion (a) étant supérieure au diamètre du tuyau, les extrémités respectives de la portion (a) étant reliées aux coudes pivotants (b, c) par le biais de points de pivotement de branche (a1, a2) et les coudes pivotants (b, c) étant en forme de griffe ou de crampon dont le profil incurvé est ouvert sur le sol, des points d'engagement (b1, c1) étant prévus dans la région du profil incurvé, points d'engagement dont la distance au point de pivotement de branche respectif (a1, a2) forme le bras de levier destiné à l'introduction du collier de serrage (1) dans la plaque de pose (2) au moyen de l'outil de pose (4), **caractérisé en ce que** le collier de serrage (1), l'au moins un tuyau (3) destiné au chauffage/refroidissement de surface, l'outil de pose (4) et la plaque de pose (2) sont conçus de sorte que le tuyau (3) à fixer forme la butée de formage et le formage soit effectué d'une part par le biais des points de pivotement de branche (a1, a2) et d'autre part par le biais du tuyau (3), la portion entourant plus de la moitié de la circonférence du tuyau après le formage.

2. Ensemble selon la revendication 1, **caractérisé en ce que** les coudes pivotants (b, c) ont un rayon inférieur à 10 mm, plus la distance des points de pivotement de branche (a1, a2) au côté supérieure de la plaque de pose.

3. Ensemble selon la revendication 2, **caractérisé en ce que** le collier de serrage a une profondeur de pénétration dans la plaque de pose < 10 mm.

4. Ensemble selon la revendication 1, **caractérisé en ce que** les coudes pivotants (b, c) du collier de serrage ont un rayon < 5 mm, plus la distance des points de pivotement de branche (a1, a2) au côté supérieur de la plaque de pose.

5. Ensemble selon la revendication 4, **caractérisé en ce que** le collier de serrage a une profondeur de pénétration dans la plaque de pose < 5 mm.

6. Ensemble selon l'une des revendications 1 à 5, **caractérisé en ce que** le collier de serrage comprend un fil et a une épaisseur < 2 mm.

7. Ensemble selon l'une des revendications 1 à 6, **caractérisé en ce que** les pointes d'extrémité des coudes pivotants (b, c) peuvent être introduites dans la plaque de pose et sont pliées en direction du tuyau (3) et se trouvent face à face.

8. Procédé de fixation d'un tuyau (3) à une plaque de pose (2) au moyen d'un collier de serrage (1), le tuyau (3), le collier de serrage (1), l'outil de pose (4) et la plaque de pose (2) formant un ensemble selon les revendications 1 à 7, **caractérisé en ce que** le tube (3) à fixer forme la butée de formage et le formage est effectué d'une part par le biais des points de pivotement de branche (a1, a2) et d'autre part par le biais du tuyau (3) lui-même, la portion (a) entourant plus de la moitié de la circonférence du tuyau après le formage.

9. Procédé selon la revendication 8, **caractérisé en ce que**
le rayon de courbure r reste le même pendant le formage, de sorte que les coudes pivotants (b, c) se déplacent sur une courbe passant par un point de pénétration pendant le formage, les coudes pivotants (b, c) formant un angle α, dans une plage comprise entre 90° et 40°, entre la tangente aux extrémités de coude pivotant et le côté supérieur de la plaque au début du formage.
